**Europäisches Patentamt**

(19) **European Patent Office**

**Office européen des brevets**

(11) Publication number:          **0 014 808**
**A1**

(12)          **EUROPEAN PATENT APPLICATION**

(21) Application number: **79303003.2**

(22) Date of filing: **21.12.79**

(51) Int. Cl.³: **C 08 G 18/42**
**C 08 G 18/64, C 08 G 18/36**
**C 09 D 3/72, C 08 G 18/32**

---

(30) Priority: **04.01.79 US 855**

(43) Date of publication of application:
**03.09.80 Bulletin 80/18**

(84) Designated Contracting States:
**DE FR GB IT**

(71) Applicant: **FORD MOTOR COMPANY LIMITED**
**Eagle Way**
**Brentwood Essex CM13 3BW(GB)**

(84) Designated Contracting States:
**GB**

(71) Applicant: **FORD-WERKE AKTIENGESELLSCHAFT**
**Ottoplatz 2 Postfach 210369**
**D-5000 Köln 21(DE)**

(84) Designated Contracting States:
**DE**

(71) Applicant: **FORD FRANCE SOCIETE ANONYME**
**344 Avenue Napoleon Bonaparte B.P. 307**
**F-92506 Rueil Malmaison Cedex(FR)**

(84) Designated Contracting States:
**FR**

(71) Applicant: **Ford Motor Company**

**Dearborn Wayne Michigan(US)**

(84) Designated Contracting States:
**IT**

(72) Inventor: **Peng, Stephen C.**
**Sandy Creek Drive**
**Utica, Michigan(US)**

(72) Inventor: **Thomson, David M.**
**37069 Charter Oaks Blvd**
**Mt. Clemens, Michigan 48043(US)**

(74) Representative: **Drakeford, Robert William et al,**
**Ford Motor Company Limited 15/448, Research &**
**Engineering Centre Laindon**
**Basildon Essex SS15 6EE(GB)**

---

(54) **Coating composition.**

(57) A high solids, thermosetting coating composition which, exclusive of pigments, solvents and other nonreactive components consists essentially of:

(A) a hydroxy bearing oligoester having a number average molecular weight ($M_n$) of between about 150 and about 3000, bearing at least about 2 hydroxyl groups per molecule, and being formed by an esterification reaction between a carboxylic acid and an epoxide; and

(B) a polyisocyanate crosslinking agent having an average of at least two reactive isocyanate groups per molecule and being included in said composition in an amount sufficient to provide between about .5 and about 1.6 isocyanate groups per hydroxyl group present in the composition.

**EP 0 014 808 A1**

Croydon Printing Company Ltd.

- 2 -

## DESCRIPTION

This invention relates to coating compositions.  More particularly, the invention relates to polymeric, high solids coating, compositions adapted to provide an automotive topcoats.

Because of increasingly strict solvent emissions regulations in recent years, low solvent emission paints have become very desirable. A number of high solids paint compositions have been proposed to meet these low solvent emission requirements; however, many of these compositions are deficient because of difficulty of application, slow curing rates, lack of flexibility, poor durability and low solvent and water resistance.  Many of the proposed compositions have been particularly deficient as automotive topcoats.

The present invention provides a coating composition which comprises:-

(A)  a hydroxy bearing oligoester (i) having a number average molecular weight $(\overline{M}_n)$ of between about 150 and about 3000, (ii) bearing at least about 2 hydroxyl groups per molecule, and (iii) being formed by an esterification reaction between a carboxylic acid and an epoxide; and

(B)  a polyisocyanate crosslinking agent having an average of at least two reactive isocyanate groups per molecule, and being included in said coating composition in an amount sufficient to provide between about .5 and about 1.6 reactive isocyanate groups per hydroxyl group present in said composition.

In addition, the coating composition of the invention may include additives, catalysts, antioxidants, U.V. absorbers, flow control or wetting agents, antistatic agents, pigments, plasticizers, solvents, etc.

Preferably the thermosetting coating compositions of this invention preferably contain greater than about 50% by weight, and most preferably greater than 70% by weight of nonvolatile solids.

The preferred compositions of the invention are particularly suitable for those applications requiring high gloss, hardness, durability, and high solvent and water resistance as well as a fast cure rate at relatively low temperatures, e.g., between about 20°C. and about 130°C., preferably between about 75°C. and about 100°C.

Each of the components of the high solids coating compositions of the invention, the amounts of each of the components required to achieve the desired results of the invention and methods for applying the composition are described hereinafter in greater detail.

Hydroxy Functional Oligoester

One of the two principal components in the high solids coating compositions of this invention is a hydroxy functional oligoester (i) having a number average molecular weight ($\bar{M}_n$) of between about 150 and about 3,000, preferably between about 230 and about 1000, (ii) bearing at least about 2 hydroxyl groups per molecule, and (iii) being formed by an esterification reaction between a carboxylic acid and an epoxide.

Exemplary of the hydroxy functional oligoesters useful in compositions of the invention are: (i) the esterification reaction product of a polycarboxylic acid, i.e., a carboxylic acid bearing 2 or more carboxyl groups, and a monoepoxide; (ii) the esterification reaction product of a polyepxoide, i.e., a compound having 2 or more epoxide groups and a monocarboxylic acid and (iii) the esterification reaction product of a hydroxy functional carboxylic acid and a mono- or polyepoxide.

The first type of hydroxy functional oligoester noted above is preferably prepared by reacting approximately 1 to 1 equivalent quantities of a polycarboxylic acid with an alkylene oxide in the presence of an esterification catalyst. A small excess of the alkylene oxide is desirable, but not necessary. Among the preferred carboxylic acids for preparing this type of oligoester are aliphatic and aromatic acids including succinic acid, glutaric acid, adipic acid, pimelic acid, suberic acid, azelaic acid, sebacic acid, dodecane dicarboxylic acid, dimer fatty acid, trimer fatty acid, phthalic acid, isophthalic acid, terephthalic acid, and hexahydrophthalic acid. Still other useful acids are various carboxy bearing polymers including carboxy terminated polyesters, carboxy terminated polybutadienes, and the like. Such materials will be apparent to those skilled in the art. Although numerous acids may be employed to make this type of oligoester, dicarboxylic acids containing 6 to 12 carbons are most preferred. Of course, mixtures of the various di- or polycarboxylic acids may also be employed.

Monoepoxides useful in preparing this first type of oligoester are epoxides which contain a three-membered epoxide group. Preferred epoxides are alkylene oxides of two to three carbon atoms, such as ethylene oxide and propylene oxide. Among the many other useful epoxides which will be apparent to those skilled in the art are 1,2 butylene oxide, 2,3-butylene oxide, 1,2 hexylene oxide, 1,3-epoxydecane, 1,2-epoxydodecane, cyclopentene oxide, styrene oxide, butyl glycidyl ether, epichlorohydrin. etc. Of course, mixtures of monoepoxides may also be used.

The second type of hydroxy functional oligoester

- 5 -

noted above may be prepared by reacting one or more polyepoxides with one or more monocarboxylic acids, preferably in an approximate equivalent ratio. useful polyepoxides contain at least two epoxy groups with the diepoxides being most preferred. Among the preferred diepoxides useful in the preparation of such an oligoester are diglycidyl ether of bisphenol A and butyl diglycidyl ether. Monocarboxylic acids useful may be selected from aliphatic. cycloaliphatic, and aromatic carboxylic acids and mixtures thereof. Exemplary of the many acids which may be employed are benzoic acid, t-butyl benzoic acid and acetic acid. Preparation of oligoesters from monocarboxylic acids and polyepoxides is well known in the art and is further described, for example, in U.S. patents 2,456,408 and 2,653,141.

The preparation of the hydroxy functional oligoester by the esterification reaction of a hydroxy functional monocarboxylic acid with an epoxide is described in U.S. patent 3,404,018, the teachig-s of which are hereby incorporated by reference. While the epoxides employes in accordance with the teachigns of that patent are polyepoxides, oligoesters may be prepared in a similar manner to that described therein by employing a monoepoxide, such as an alkylene oxide, and a hydroxy functional monocarboxylic acid as described therein. Numerous monoepoxide materials suitable for this purpose will be apparent to those skilled in the art.

It will be appreciated that various combinations of carboxylic acids and epoxides other than those specifically discussed above may be reacted in order to provide oligoesters useful in the high solids compositions of the invention. For example, oligoesters bearing hydroxy functionality other than that produced by the esterification reaction may be produced by reacting not just a hydroxy bearing carboxylic acid with an epoxide as discussed above, but by reacting carboxylic acids and epoxides. either of which bears hydroxyl functionality. Examples of such oligoesters are (i) trihydroxy oligoesters prepared by reacting a monocarboxylic acid with a monohydroxy diepoxide such as hydroxy glycidyl ethers of bisphenol A and aliphatic hydroxy glycidyl resins, (ii) trihydroxy oligoesters prepared by reacting a monohydroxy monocarboxylic acid such as 3-hydroxybutyric acid. 4-hydroxycyclohexyl carboxylic acid or 4-methylol benzoic acid with a monohydroxy monoepoxide such as glycidol and 1,4-butanediolmonoglycidyl ether; or (iii) trihydroxy oligoesters prepared by reacting a monocarboxylic acid with a dihydroxy monoepoxide such as acetic acid with 2,3-epoxy-1,4-butane diol.

It will be appreciated by those skilled in the art that all of the above are merely exemplary of the various oligoesters falling within the scope of those useful in compositions of the invention.

Noninterfering functionality present in the carboxylic acid or epoxide molecule employed in preparing any of the above hydroxy functional oligoesters may yield certain specific coating properties which may be desirable. Such functionalities and their effects. which will be apparent to those skilled in the art may include, for example, a halogen. an ester linkage, a reactive double bond, etc. More specifically. for example, an oligoester prepared by reaction of chlorendic acid and propylene oxide when formulated with a polyisocyanate in accoreance with the invention yields a polyurethane coating which exhibits fire retardant properties.

Preferred esterification catalysts useful in preparation of hydroxy functional oligoesters by the esterification reactions discussed above are the tetralkyl ammonium salts such as tetra methyl ammonium chloride, tetraethyl ammonium bromide and trimethyl benzyl ammonium chloride as well as metal salts of a carboxylic acid. such as potassium octeate or chromium III octoate. Other useful esterification catalysts include: metal halides such as chromium trichloride, ferric trichloride, and aluminum trichloride; mercaptans and thioethers such as octyl mercaptan, dimercapto propanol and dimercapto-diethyl ether; tertiary amines such as triethyl amine, pyridine. dimethyl-andine, quinoline, B-picoline, ethylpyridine; and the like.

Still other catalysts known to catalyze carboxy/epoxy reactions will be apparent to those skilled in this art.

In all cases, the oligoesters formed are low molecular weight adducts having a narrow molecular weight distribution when compared to similar compositions made by normal polyester manufacturing techniques.

Various mixtures of these types of oligoesters may also be employed within the scope of the compositions of the invention described herein.

## Polyisocyanate Crosslinking Agent

The other major component of the thermosetting, high solids coating composition of the invention is a polyisocyanate, i.e., a compound having 2 or more, preferably 3 or more, reactive isocyanate groups per molecule. This polyisocyanate crosslinking agent is included in the compositions of the invention in an amount sufficient to provide between about .5 and about 1.6 preferably between about .8 and about 1.3, reactive isocyanate groups per hydroxy group in the composition. Most preferably the crosslinking agent is included in an amount sufficient to provide about 1.1 isocyanate groups per hydroxyl group in the composition.

Polyisocyanates are well known in the art and numerous suitable isocyanates having 2 or more reactive isocyanate groups per molecule will be apparent to those skilled in the art. Among the many suitable polyisocyanates are aliphatic, cycloaliphatic and aromatic isocyanate compounds. Representative of the numerous isocyanates which may be employed are (1) aliphatic diisocyanates such as trimethylene diisocyanate. tetramethylene diisocyanate, pentamethylene diisocyanate, hexamethylene diisocyanate. 1,2 propylene diisocyanate, 1,2 butylene diisocyanate, 2,3 butylene diisocyanate, 1,3 butylene diisocyanate, ethylidene diisocyanate. butylidene diisocyanate, 4,4'bis (isocyanate hexyl) methane, bis(2-isocyanate-ethyl) fumarate, 2,6- diisocyanate methyl caproate, 2,2,4(2,4,4)-trimethylhexamethylene diisocyanate, and dimer acid diisocyanates; (2) cycloaliphatic diisocyanates such as 1,3 cyclopentane diisocyanate, 1,4 cyclopentane diisocyanate, 1,3 cyclopentane diisocyanate, and methylcyclohexylene diisocyanate; (3) aromatic diisocyanates such as m-phenylene diisocyanate, p-phenylene diisocyanate, 4,4'diphenyl diisocyanate, 1,5 methylene diisocyanate, 1,4 napthalene diisocyanate; (4) aliphatic/aromatic diisocyanates such as 4,4'diphenylene-methane diisocyanates, 2,4 or 2,6 tolylene diisocyanate, 4,4'toluidene diisocyanate, 1,4 xylylene diisocyanate; (5) nuclear substituted aromatic compounds such as dianisidine diisocyanate, 4,4'diphenylether diisocyanate, chlorodiphenylene diisocyanate; (6) triisocyanates such as triphenylmethane 4,4', 4,4" triisocyanate, 1,3,5 triisocyanate benzene, 2,4,6 triisocyanate toluene; (7) tetraisocyanates such as 4,4'diphenyl dimethylmethane 2,2', 5,5' tetraisocyanate; (8) polymerized isocyanates such as tolylene diisocyanate dimers and trimers and the like; and (9) polyisocyanates such as prepolymers derived from a polyol, including polyether polyols or polyester polyols (including polyethers which are reacted with excess polyisocyanates to form isocyanate terminated prepolymers), simple polyols such as glycols (e.g., ethylene glycol, propylene glycol), other polyols such as glycerol, trimethylol propane, hexane triol, pentaerythritol and the like, as well as monoethers, e.g., diethylene glycol, tripropylene glycol and the like and polyethers, i.e., alkylene oxide condensates of the above.

Especially preferred to use in the compositions of the invention are trimerized products of aliphatic diisocyanates such as 1,6 hexamethylene diisocyanate. Still another particularly preferred type of crosslinking agent is a polyisocyanate having a biuret structure. This type of polyisocyanate is well known as are methods for making the same. One such polyisocyanate crosslinking agent is a high molecular weight biuret of 1,6 hexamethylene diisocyanate sold by Mobay Chemical Company under the tradename Desmodur N. Exemplary of other biuret type polyisocyanates are those prepared in accordance with U.S. Patent 3,976,622 to Wagner et al.

Other Materials

In addition to the above discussed components, other materials may be included in the high solids coating compositions of the invention. These include conventional materials such as catalysts, antioxidants, U.V. absorbers, solvents, surface modifiers and wetting agents, as well as pigments. The solvents used in the coating compositions of the inventions are those which are commonly used and which will not react with the composition components. Typical solvents useful in the coating compositons facilitate spray application at high solids content and include toluene, xylene, methylethyl ketone, acetone, tetrahydrofuran, ethyl-acetate, dimethylsuccinate, dimethylglutarate. dimethyladi-pate, or mixtures thereof. As mentioned above. the nonvolatile solids content of the high solids coating composition is at least 50% and preferably 70% or more, thus limiting the amount of solvent included in the composition.

Surface modifiers or wetting agents are common additives for liquid paint compositions. The exact mode of operation of these surface modifiers is not known, but it is thought that their presence contributes to better adhesion of the coating composition of the surface being coated and helps formation of thin coatings on surfaces, particularly metal surfaces. These surface modifiers are exemplified by acrylic polymers containing 0.1-10 percent weight of copolymerized monoethylenically unsaturated carboxylic acid esters such as methacrylic acid esters, acrylic acid esters or itaconic acid esters, cellulose acetate butyrate, silicon oils or mixtures thereof. Of course, the choice of surface modifiers or wetting agent is dependent upon the type of surface to be coated and selection of the same is clearly within the skill of the artisan.

A particularly useful additive for the high solids coating compositions is a flow-control additive which is prepared as described in Example D of U.S. Patent 4,075.141 to Samuel Porter, Jr. et al dated February 21, 1978. That flow control additive, which is actually a nonaqueous dis-persion, is preferably employed in amounts ranging from about 5 to about 10 weight percent based on total resin solids, although greater or lesser amounts may be used.

The high solids coating composition of the invention also may include pigments. The amount of pigment in the composition may vary, but preferably is between about 3 and about 45 weight percent based on total solids weight of the composition.

Application Techniques

The high solids coating compositions of the invention can be applied by conventional methods known to those in the art. These include roller coating, spray coating, dipping or brushing and, of course, the particular application technique chosen will depend on the particular substrate to be coated, the environment in which the coating operation is to take place, and the pot life of the composition.

A particularly preferred technique for applying the high solids coating compositions, particularly when applying the same to automobiles as topcoats, is spray coating through the nozzle of a spray gun. In accordance with this preferred technique, the hydroxy functional oligoester and the hydroxy functional copolymer along with other additives such as pigments, U.V. absorbers, antioxidants and other nonreactive materials are admixed with a solvent. These materials are fed as one component of a two component system into a spray gun which combines the materials as they are sprayed onto the automotive substrate. The other material is the isocyanate crosslinking agent, which may or may not be cut with a suitable nonreactive solvent.

The invention will be further understood by referring to the following detailed examples. It should be understood that the specific examples are presented by way of illustration and not by way of limitation. Unless otherwise specified, all references to "parts" is intended to mean parts by weight.

Example I

(A) Preparation of Hydroxy Functional Oligoester

A reaction flask equipped with a stirrer. water condenser, thermometer, nitrogen inlet and a monomer addition funnel is charged with 188 grams (1.0 mole) of azelaic acid and 0.95 grams of an organo chromium (III) catalyst sold under the trade designation AMC-2 by Cordova Chemical Co. These reactants are heated to 130 ± 5°C. under agitation and a nitrogen atmosphere. Propylene oxide in the amount of 116 grams (2.0 moles) is then added dropwise over a period of 5 hours. The reaction is maintained until the acid number is less than 1.0. Any excess propylene oxide is removed by applying a slight vacuum. The product has a Gardner-Holdt bubble viscosity of J at 25°C.

(B) Formulation and Application of Coating Composition

In a mixer 62 grams of the above hydroxy functional oligoester is mixed with 100 grams of a pigment dispersion consisting of 72 grams of titanium dioxide, 13 grams of the above prepared hydroxy functional oligoester, and 15 grams of Cellosolve Acetate.

To this mixture is added 34 grams of xylene solvent to reduce the solids level to approximately 75% and .36 grams of dibutyldilaurate catalyst are added. This admixture is fed as one component of a two component feed to a spray gun. The other component comprises polyisocyanate crosslinking agent Desmodur N, manufactured by Mobay Chemical Co., or a solution of Desmodur N in a nonreactive solvent. This material is a biuret type polyisocyanate.

These two components are mixed and spray applied at 78% volume solids such that ratio of reactive isocyanate groups per hydroxyl group inthe composition is approximately 1.1 to 1.0. The coating is cured for 30 minutes at 180°F. to provide a high gloss enamel film with excellent flexibility and toughness.

Example II

A thermosetting high solids paint composition is prepared and applied in the same manner as in Example I with the exception that

(a) the oligoester is prepared by reacting 188 grams (1 mole) of azelaic acid and 127.6 grams (2.2 moles) of propylene oxide in the presence of 0.94 grams of AMC-2 organochrome (III) catalyst from Cordova Chemical Co. to produce an oligoester with a Gardner-Holdt viscosity of I-H, and

(b) toluene diisocyanate is employed as the crosslinking agent in an amount sufficient to provide about 1.3 reactive isocyanate groups per hydroxyl group in the composition.

Example III

A thermosetting high solids paint composition is prepared and applied in the same manner as in Example I with the exception that:

(a) the oligoester is prepared by reacting 202 grams (1.0 mole) of sebacic acid with 116 grams (2 moles) of propylene oxide in the presence of 1.01 grams of AMC-2 organochrome III catalyst to produce a product with a Gardner-Holdt bubble viscosity of I-J; and

(b) methylcyclohexylene diisocyanate is employed as the crosslinking agent in an amount sufficient to provide about 0.8 isocyanate groups per hydroxyl group in the composition.

Example IV

A thermosetting high solids paint composition is prepared and applied in the same manner as in Example I with the exception that:

(a) the oligoester is prepared by reacting 570 grams (1 mole) of dimer fatty acid (Empol 1016 from Emery Industries, Inc.) with 116 grams (2.0 moles) of propylene oxide in the presence of 2.85 grams of AMC-2 organochrome III catalyst to produce a product with a Gardner-Holdt bubble viscosity of X; and

(b)   bis(2-isocyanato ethyl) fumarate is used in the crosslinking agent in an amount sufficient to provide about 1.4 reactive isocyanate groups per hydroxy group in the composition.

Example V

A thermosetting high solids paint composition is prepared and applied in the same manner as in Example I with the exception that:

(a) oligoester is prepared by reacting 188 grams (1.0 mole) azelaic acid and 41.5 grams (0.25 moles) of isophthalic acid with 145 grams (2.5 moles) of propylene oxide in the presence of 1.15 grams of AMC-2 organochrome III catalyst to produce a product with a Gardner-Holdt bubble viscosity of R; and

(b) trimerized 1,6 hexamethylene diisocyanate is used as the crosslinking agent in an amount sufficient to provide about .75 reactive isocyanate groups per hydroxyl group in the composition.

Example VI

A thermosetting high solids paint composition is prepared and applied as in Example I with the exception that:

(a) the oligoester is prepared by reacting 188 grams (1.0 mole) of azelaic acid with 116 grams (2.0 moles) of propylene oxide in the presence of 2.4 grams of tetramethyl ammonium chloride to produce a product with a Gardner-Holdt bubble viscosity of K; and

(b) 2,2,4-trimethylhexamethylene diisocyanate is used as the crosslinking agent in an amount sufficient to provide about 0.5 reactive isocyanate groups per molecule.

Example VII

A thermosetting high solids paint composition is prepared as in Example I with the exception that:

   (a)   the oligoester is prepared by charging 360 grams of diglycidyl ether of bisphenol A with an epoxy equivalent weight of 180 (Epon 826 from Shell Chemical Co.) and 1.5 grams of tetraethylammonium bromide into a reaction flask equipped with a stirrer, water condenser, thermometer, nitrogen inlet and a monomer addition funnel. These materials are heated to 130 ± 5°C. under agitation and a nitrogen atmosphere and 120 grams of acetic acid is added thereto dropwise over a period of 2 hours; and

   (b)   the trimethylol propane adduct of isophorone diisocyanate prepared as described hereinbefore is used as the crosslinking agent in an amount sufficient to provide about 1 reactive isocyanate group per hydroxyl group in the composition.


Example VIII

   A thermosetting, high solids paint composition is prepared as in Example I with the exception that:

   (a)   the hydroxy functional oligoester is prepared by charging 300 grams of 12-hydroxystearic acid and 1 gram of chromium III catalyst AMC-2 from Cordova Chemical Co. into a reaction flask equipped with a stirrer, water condenser, thermometer, nitrogen inlet and a monomer addition funnel, heating to 140 ± 5°C. under agitation and a nitrogen atmosphere, dropwise over a 3-hour period; and

   (b) Desmodur N biuret polyisocyanate is used as a crosslinking agent in an amount sufficient to provide about 1.2 isocyanate groups per hydroxyl group in the composition.


Example IX

   A thermosetting, high solids paint composition is prepared as in Example I with the exception that:

0014808

(a)   the hydroxy functional oligoester is prepared by

(i) preparing a trifunctional carboxylic acid by reacting 1 mole (134 grams) of trimethylol propane with 3 moles (444 grams) of phthalic anhydride;

(ii)   adding 1.5 grams of trimethyl-ammonium chloride to the reaction flask containing the trifunctional carboxylic acid and heating the materials to 140 ± 5°C. under agitation and a nitrogen atmosphere: and

(iii)   adding 3 moles (174 grams) of propylene oxide thereto dropwise over a 4-hour period; and

(b)   toluene diisocyanate (mixture of 2,4 and 2,6 isomers) is used as the polyisocyanate cross-linking agent in an amount sufficient to provide about 1.1 reactive isocyanate groups per hydroyxl group in the composition.

The foregoing examples are intended to be merely illustrative of the invention defined in the appended claims. Those skilled in the art will be aware that modifications may be made therein.

CLAIMS.

1.      A coating composition which comprises:-

(A) a hydroxy functional oligoester (i) having a number average molecular weight ($\overline{M}_n$) of between about 150 and about 3,000, (ii ) bearing at least about 2 hydroxyl groups per molecule, and (iii) being formed by an esterification reaction between a carboxylic acid and an epoxide; and

(B)   A polyisocyanate crosslinking agent having an average of at least two reactive isocynate groups per molecule, said polyisocyanate crosslinking agent being included in said coating composition in an amount sufficient to provide between about 0.5 and about 1.6 reactive isocyanate groups per hydroxyl group in said composition.

2.      A coating composition in accordance with Claim 1 wherein said oligoester comprises:-

(i)   the esterification reaction product of a polycarboxylic acid and a monoepoxide;

(ii)  the esterification reaction product of a polyepoxide and a monocarboxylic acid;

(iii) the esterification reaction product of a hydroxy functional carboxylic acid and a mono- or polyepoxide; or

(iv)  a mixture of two or more of reaction products (i) to (iii).

3.      A coating composition in accordance with Claim 1 or Claim 2 wherein said hydroxy functional oligoester comprises an esterification reaction product of an alkylene oxide and an aliphatic dicarboxylic acid containing 6 to 12 carbon atoms.

4.      A coating composition in accordance with any one of Claims 1 to 3 wherein said hydroxy functional oligoester is an esterification reaction product of an alkylene oxide and a polycarboxylic acid.

5.      A thermosetting coating composition in accordance with any one of Claims 1 to 4 wherein said hydroxy functional oligoester is an esterification reaction product of a diepoxide and one or more aliphatic monocarboxylic acids containing between about 1 and about 22 carbon atoms.

6.       A coating composition in accordance with any one of Claims 1 to 5 wherein said hydroxy functional oligoester is an esterification reaction product of a hydroxy functional aliphatic monocarboxylic acid having between about 2 and 22 carbon atoms and a polyepoxide.

7.       A thermoesetting coating composition in accordance with any of Claims 1-5 wherein said hydroxy functional oligoester is an esterification reaction product of a hydroxy functional aliphatic carboxylic acid containing between about 2 and 22 carbon atoms and an alkylene oxide.

8.       A coating composition in accordance with any one of Claims 1 to 7 wherein said oligoester bears functionality other than hydroxy functionality, which functionality does not interfere with the corsslinking reaction between said hydroxy functionality and said isocyanate.

9.       A coating composition in accordance with any one of Claims 1 to 8 wherein said polyisocyanate crosslinking agent is included in said composition in an amount sufficient to provide between about 0.8 and about 1.3 reactive isocynate groups per hydroxyl group in said composition.

10.       A coating composition in accordance with any one of Claims 1 to 9 wherein said polyisocyanate crosslinking agent comprises a trimerized product of an aliphatic diisocyanate.

11.       A coating composition in accordance with Claim 10 wherein said polyisocyanate crosslinking agent comprises a trimerized reaction product of 1,6 hexamethylene diisocyanate.

12.       A coating composition in accordance with any one of claims 1 to 9 wherein said polyisocyanate cross-linking agent comprises a polyisocyanate having a biuret structure.

13. A coating composition in accordance with any one of claims 1 to 9 wherein said polyisocyanate crosslinking agent is an adduct of a polyol and a diisocyanate.

14. A thermosetting coating composition which, exclusive of pigments, solvents and other nonreactive components consists essentially of:

(A) A hydroxy bearing oligoester having a number average molecular weight $(M_n)$ of between about 150 and about 3000, said hydroxy bearing oligoester being the esterification reaction product of an aliphatic dicarboxylic acid having between 6 and 12 carbon atoms and an alkylene oxide; and

(B) A polyisocyanate corsslinking agent having an average of at least two reactive isocyanate-roups per molecule, said isocyanate crosslinking agent having a biuret structure and being included in said composition in an amount sufficient to provide between about .8 and about 1.3 isocyanate groups per hydroxyl group in said composition.

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| D,X | <u>US - A - 3 404 018</u> (D.D. HICKS) <br> * Column 1, lines 11-20; column 2, lines 21-35; column 5, lines 4-8, 42-49 * | 1,2,6, 9 | C 08 G 18/42 <br> 18/64 <br> 18/36 <br> C C9 P 3/72 <br> C 08 G 18/32 |
| X | <u>FR - A - 2 030 803</u> (DESOTO INC.) <br> * Pages 21,22; claims 1,2,4,9; page 1, lines 25-34; page 6, lines 8-30; page 15, example 1 * | 1,2,5, 6,8,9 | |
| X | <u>US - A - 3 639 655</u> (F.B. JONES) <br> * Column 1, lines 12-15; column 3, lines 5-14, 27-45 * | 1 | **TECHNICAL FIELDS SEARCHED (Int.Cl. 3)** <br><br> C 08 G 18/42 <br> 18/64 <br> 18/58 <br> 18/30 <br> 18/36 <br> 59/16 <br> 59/40 <br> 18/32 |
| X | <u>US - A - 3 502 601</u> (L.C. CASE et al.) <br> * Column 1, lines 16-25; column 3, lines 4-11; column 5, lines 20-50; column 13, lines 55-58; column 17, lines 17-35; column 21; column 22; examples 10,11 * | 1,2,4 | |
| X | <u>FR - A - 1 110 320</u> (SINCOBEL) <br> * Page 4, summary points 1 and 1a; page 2, right-hand column, paragraphs 2,5; page 2, right-hand column, last paragraph - page 3, left-hand column, paragraph 1 * | 1,2,5, 6, 13 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| X | <u>US - A - 3 789 044</u> (D.D. TAFT et al.) | 1,2,10- 13 | &: member of the same patent family, corresponding document |

The present search report has been drawn up for all claims

| Place of search | Date of completion of the search | Examiner |
|---|---|---|
| The Hague | 25-03-1980 | V. PUYMBROECK |

European Patent
Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | * Column 1, lines 14-20; column 5, lines 21-55; column 7, line 25 - column 8, line 36; column 9, lines 31-51; column 11, lines 31-38 * <br><br>-- <br><br>FR - A - 1 475 671 (MOBIL OIL CORP.) <br><br> * Pages 9 and 10, point c; page 3, left-hand column, paragraph 2; page 8, right-hand column, paragraph 3 * <br><br>---- | <br><br><br><br><br><br>1 |

CLASSIFICATION OF THE
APPLICATION (Int. Cl. 3)

TECHNICAL FIELDS
SEARCHED (Int. Cl. 3)

EPO Form 1503.2  06.78